# EUROPÄISCHE PATENTSCHRIFT

(11) **EP 0 418 826 B1**
(45) Veröffentlichungstag und Bekanntmachung des Hinweises auf die Patenterteilung: **06.07.1994**
(21) Anmeldenummer: 90117942.4
(22) Anmeldetag: 18.09.1990
(51) Int. Cl.: B64G 7/00, B64G 4/00

(54) **Einrichtung zur Simulation auf der Erde von Operationen eines im Weltraum einsetzbaren Manipulators an einem Modell eines Raumfahrzeuges**
Space vehicle mockup to simulate an earth operation processing in space by an integrated manipulator
Dispositif pour similer sur terre des opérations dans l'espace d'un manipulateur intégré à un modèle de véhicule spatial

(30) Priorität: 22.09.1989 DE 3931753
(43) Veröffentlichungstag der Anmeldung: 27.03.1991
(73) Patentinhaber: Deutsche Forschungsanstalt für Luft- und Raumfahrt e.V., 51126 Köln (DE)
(72) Erfinder: Brand, Bernd, D-8031 Gilching (DE); Klingelhöfer, Ernst-Ludwig, W-7064 Remshalden 5 (DE); Hoch, Kristiane, D-2000 Hamburg 54 (DE)
(74) Vertreter: von Kirschbaum, Albrecht, Dipl.-Ing.

(56) Entgegenhaltungen:
- US-A- 3 161 968
- PATENT ABSTRACTS OF JAPAN vol. 14, no. 498 (P-1124)(4441) 30 Oktober 1990,& JP-A-2203239 (HITACHI LTD) 13 August 1990,
- PROCEEDINGS 1990 IEEE INTERNATIONAL CONFERENCE ON ROBOTICS AND AUTOMATION Mai1990, CINCINNATI, OHIO (USA) Seiten 62 - 67; R.VOSSOUGHI ET AL.: "USINGIMPEDANCE CONTROLLED ROBOTS FOR SIMULATING MANIPULATION TASKS OCURRING IN AGRAVITYLESS ENVIRONMENT"
- ZEITSCHRIFT FUR FLUGWISSENSCHAFTEN UND WELTRAUMFORSCHUNG. vol. 2, no. 4, August1978, KOLN DE Seiten 261 - 269; K.H.DOETSCH, Jr.: "THE REMOTE MANIPULATORSYSTEM FOR THE SPACE SHUTTLE ORBITER"
- PATENT ABSTRACTS OF JAPAN vol. 14, no. 107 (M-942)(4050) 27 Februar 1990,& JP-A-1309900 (HITACHI LTD) 14 Dezember 1989,

## Beschreibung

Die Erfindung betrifft eine Einrichtung zur Simulation auf der Erde von in Richtung der oder um die drei Achsen eines orthogonalen Koordinatensystems durchführbaren Operationen eines im Weltraum einsetzbaren Manipulators an einem Modell eines Raumfahrzeugs nach dem Oberbegriff einer der Ansprüche 1 bis 5.

Zur Darstellung der Bewegung einschließlich der Dynamik des Originals eines Raumfahrzeugs in einer ausgewählten Ebene wird bisher eine zweidimensionale Simulation benutzt, wie beispielsweise bei "Flat Floor Facility" für das "Remote Manipulator-System"(RMS). (Hierbei ist RMS die Bezeichnung für den beim Space Shuttle der NASA eingesetzten Manipulator zur Handhabung von Nutzlasten im Orbit.) Nachteilig bei dieser Simulation ist jedoch die Beschränkung auf ebene Bewegungsabläufe, so daß keine realistische Simulation von Operationen im Weltraum möglich ist.

Zum Zwecke einer dreidimensionalen Simulation soll nach Kenntnis der Anmelderin bisher von der NASA ein der Schwerkraftwirkung angepaßtes Modell des RM-Systems verwendet werden. Bei einem solchen Modell sind dann jedoch Abweichungen gegenüber der Originalgeometrie und -dynamik bei den Strukturen und Antrieben unvermeidlich und folglich als nachteilig anzusehen.

Eine dreidimensionale Simulation wäre theoretisch auch mit einem Wassertank in einer Größenordnung von 10³ bis 10⁴ m³ möglich; bei dieser Lösung wäre außer der Größe des benötigten Wassertanks auch der Operationsbereich schwer einsehbar, so daß eine spezielle Anpassung des Manipulators und des sogenannten Mockups an den Unterwasserbetrieb d.h. dessen Kapselung, erforderlich wäre. Obendrein wäre noch ein beachtlicher Bewegungswiderstand zu überwinden.

Ferner ist von MBB/ERNO in einer Studie ein dreidimensionales Relationsmodell mit einer einfachen zentrischen Seilaufhängung vorgeschlagen worden. Bei einem solchen Simulationssystem ist jedoch keine Momentenfreiheit in mehreren Manipulationsgelenken möglich, da nur eine Seilanlenkung vorgesehen ist; obendrein ergeben sich bei der Kinematik wegen der zentrischen Seilanlenkung starke Einschränkungen.

In einer weiteren Studie von MBB/ERNO ist ein freitragendes Simulationsmodell vorgeschlagen worden, das in den Gelenken und der Struktur verstärkt ist. Bei diesem Vorschlag ist nachteilig, daß das Simulationsmodell in seiner Geometrie stark von dem Original des Raumfahrzeugs abweicht und sich daraus beachtliche kinematische Einschränkungen ergeben.

Ferner läßt sich mit diesem Modell eine beispielsweise bei einem Manipulator HERA des HERMES-Transportsystems geplante Operation, nämlich ein sogenanntes Überklettern vom Transportsystem HERMES zum frei fliegenden Columbus-Laboratorium,wegen der schweren Gelenkantriebe an der Manipulatorbasis, welche in der Größenordnung von 500 kg gegenüber 20kg am Endeffektor liegen, nicht simulieren. Dies ist jedoch bei dem geforderten Überklettern eines Manipulators unbedingt erforderlich, da hierbei ein Funktionswechsel von Basis und Endeffektor stattfindet. Das heißt, nach dem Überklettern stellt der bisherige Endeffektor die Manipulator-Basis dar, und die bisherige Basis ist nunmehr der Endeffektor. Aus diesem Grund muß daher der HERMES-Manipulator HERA auch vollkommen symmetrisch ausgeführt sein.

Unter weitgehender Vermeidung der Nachteile der bisher eingesetzten und vorgeschlagenen Simulationssysteme ist es daher Aufgabe der Erfindung, eine Einrichtung zur Simulation der Handhabung von im Weltraum einsetzbaren Manipulatoren auf der Erde so auszuführen, daß eine Simulation in allen drei Raumdimensionen möglichst ohne nennenswerte Einschränkungen der beim Original gegebenen, geometrischen, kinematischen und kinetischen Randbedingungen durchführbar ist. Gemäß der Erfindung ist diese Aufgabe bei einer Einrichtung zur Simulation von Operationen eines im Weltraum einsetzbaren Manipulators an einem Modell eines Raumfahrzeugs auf der Erde durch die Merkmale im kennzeichnenden Teil einer der Ansprüche 1 bis 5 gelöst. Vorteilhafte Weiterbildungen der Erfindung sind Gegenstand der auf einer der Ansprüche 1 bis 5 unmittelbar oder mittelbar rückbezogenen Ansprüche.

Bei den erfindungsgemäßen Einrichtungen ist eine Gewichtskompensation mindestens eines Segments durch zum Segmentschwerpunkt seitlich versetzte, auf entgegengesetzten Seiten angebrachte Anlenkungen von Trag- und Halteseilen bewirkt. Dadurch ist gegenüber einem nicht-unterstützten Segment ein von der Schwerkraft hervorgerufenes und vom jeweiligen Gelenkantrieb aufzubringendes Drehmoment weitgehend eliminiert oder zumindest sehr stark minimiert. Ein durch die seitlich versetzten Seilanlenkungen und damit durch die Exzentrizität der Aufhängungen hervorgerufenes Torsions-bzw. Biegemoment muß somit nur von der Gelenkachse aufgenommen werden und braucht nicht mehr vom Motor aufgebracht zu werden.

Wenn bei den erfindungsgemäßen Einrichtungen zwei Segmente durch seitlich bezüglich der jeweiligen Segment-Längsachse und des jeweiligen Segment-Schwerpunkts versetzte Anlenkungen an den beiden Segmenten entlastet sind, ist in vorteilhafter Weise eine durch Torsion hervorgerufene und am Endeffektor des Manipulators auftretende Verdrehung großteils kompensiert. Ferner behindern sich die Anlenkungen an den beiden Manipulatorsegmenten nicht gegenseitig, da sie auf verschiedenen Seiten der beiden Segmente angebracht sind.

Ferner läßt sich ein Überklettern, beispielsweise von dem ge-planten Transportsystem HERMES zum freifliegenden COLUMBUS-Laboratorium, mit den erfindungsgemäßen Einrichtungen in vorteilhafter Weise problemlos simulieren. Die erhöhten Anforderungen an die Kinematik, welche daraus resultieren, daß beim Überklettern der Manipulator-Basispunkt wechselt, können ohne Schwierigkeit erfüllt werden. Da die Schwerkraft und insbesondere die statischen Momente weitestgehend kompensiert oder zumindest sehr minimiert sind, können selbst in den Gelenken nahe der Basis entsprechend schwache Gelenk-Antriebe eingesetzt und verwendet werden. Dies ist von großer Bedeutung, da beim Überklettern die Funktionen von basisnahen Gelenken auf endeffektornahe Gelenke übertragen werden, welche jedoch nur kleine Momente aufnehmen können.

Gegenüber den bisher eingesetzten oder auch vorgeschlagenen Systemen weisen die erfindungsgemäßen Einrichtungen, bei welchen das Gewicht von Manipulator-Segmenten vollständig kompensiert ist, im wesentlichen die folgenden Vorteile auf. Das durch den Einfluß der Schwerkraft an den einzelnen Manipulator-Segmenten erzeugte und von den Gelenkantrieben aufzubringende Moment ist an den entlasteten Segmenten vollständig kompensiert. Aufgrund der exzentrischen Seilanlenkung sind ferner Kollisionen des Manipulators mit einem Seil weitestgehend unterbunden, theoretisch sogar völlig ausgeschlossen. Ferner kann bei einer Simulation mit den erfindungsgemäßen Einrichtungen sogar eine bezüglich der Struktur und den Gelenkantrieben flugidentische Hardware eingesetzt werden. Ferner ist durch einen Austausch von Gegengewichten eine einfache und damit kostengünstige Anpassung an unterschiedliche Manipulatortypen möglich.

Nachfolgend wird die Erfindung anhand von bevorzugten Ausführungsformen unter Bezugnahme auf die anliegenden Zeichnungen im einzelnen erläutert. Es zeigen:
- Fig. 1: eine schematische Darstellung einer ersten Ausführungsform einer Simulationseinrichtung mit einem Tragrahmen, eines Manipulators und eines Modells eines Raumfahrzeugs;
- Fig.2a: eine der Fig.1 entsprechende, schematische Darstellung einer zweiten Ausführungsform einer Simulationseinrichtung mit einem an einer vertikalen Gitterstruktur angebrachten Tragrahmen;
- Fig.2b: eine der Fig.1 entsprechende, schematische Darstellung noch einer weiteren Ausführungsform einer Simulationseinrichtung mit einem um die z-Achse drehbaren Tragrahmen;
- Fig.3: eine schematische Darstellung von wesentlichen Teilen der erfindungsgemäßen Einrichtung zusammen mit dem in Fig.1 oder 2 schematisch wiedergegebenen Manipulator;
- Fig.4: eine vergrößerte schematische Darstellung der in Fig.3 mit A bis C bezeichneten Abschnitte der erfindungsgemäßen Einrichtung;
- Fig.5: ebenfalls in vergrößerter Darstellung eine Modifikation der in Fig. 3 und 4 dargestellten Einzelheit A;
- Fig.6a: eine vergrößerte Darstellung der in Fig.3 mit D bezeichneten Einzelheit;
- Fig.6b: ein der Fig.6a entsprechende Darstellung mit einer bevorzugten Anlenkung von zwei Tragseilen an einem Manipulator-Segment;
- Fig.7: eine vergrößerte Darstellung der in Fig.3 mit E bezeichneten Einzelheit;
- Fig.8: ebenfalls in vergrößerter Darstellung eine Modifikation der Einzelheit in Fig.7;
- Fig.9: in vergrößerter Darstellung eine Modifikation der in Fig.3 und 4 dargestellten Einzelheiten B und C mit momentfreier Anlenkung, und
- Fig.10: eine schematische Darstellung nach einer weiteren Ausführungsform der erfindungsgemäßen Einrichtung.

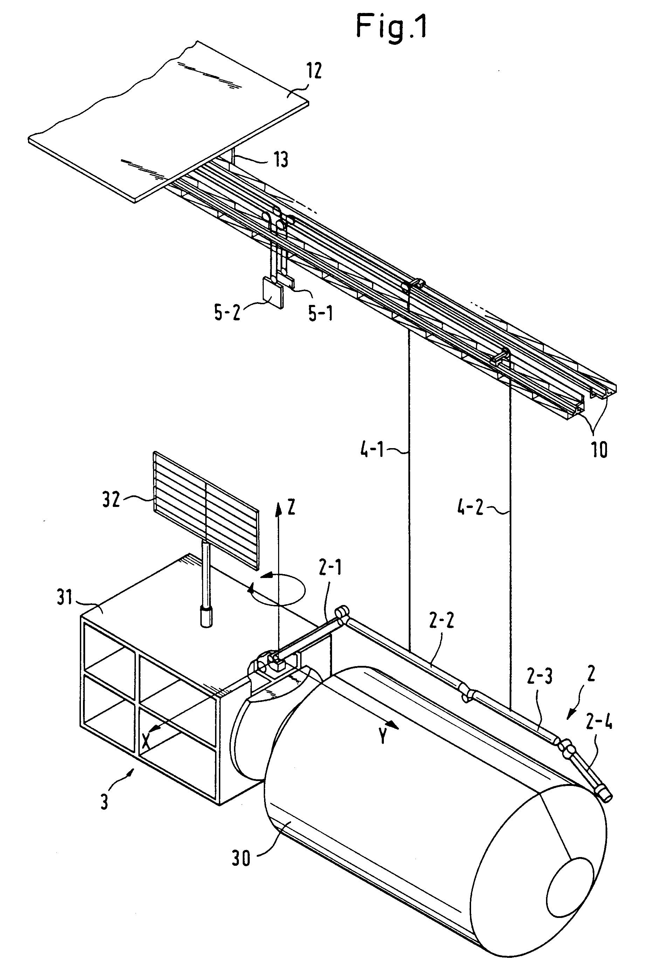

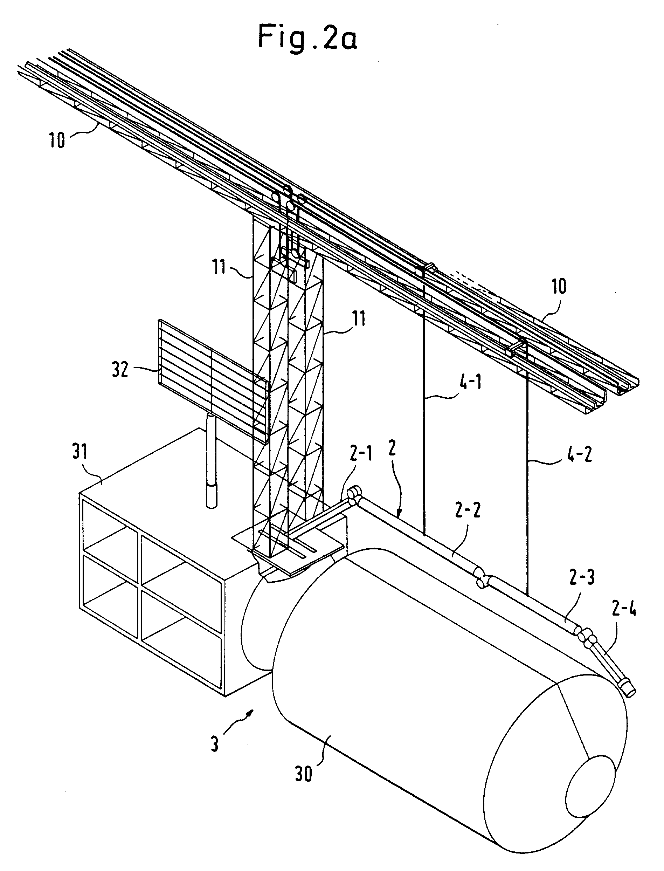

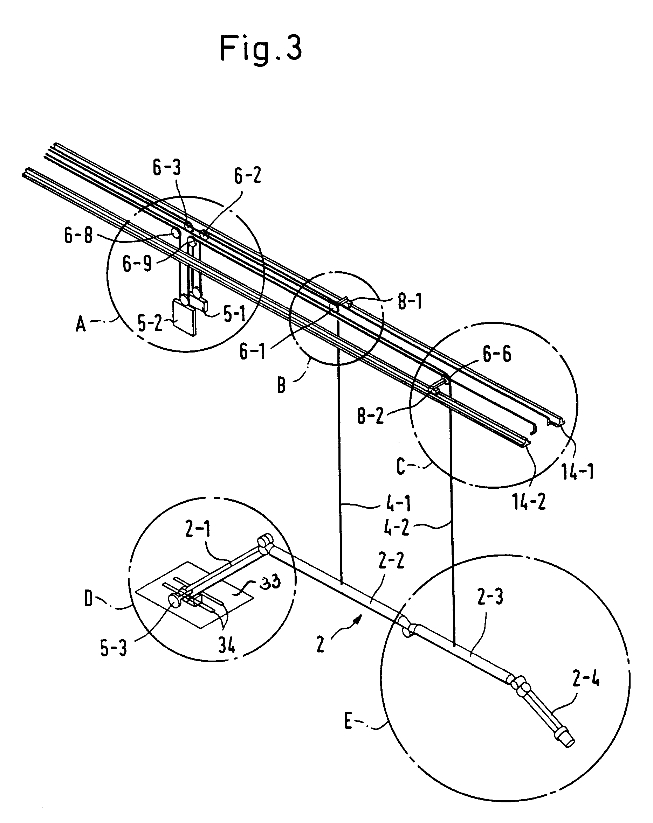

In Fig. 1 und 2a ist jeweils ein Modell eines Raumfahrzeugs 3 dargestellt, welches ein Raumfahrzeug 30 aufweist, welches an einem Versorgungsmodul 31 angedockt ist, auf welchem ein Solarzellen tragendes Teil sowie eine Antennenanordnung 32 vorgesehen sind. Ferner ist an einem Zwischenboden 33 (siehe Fig.3) ein in seiner Gesamtheit mit 2 bezeichneter Manipulator mit einem Segment 2-1 in einer Weise gehaltert, wie nachstehend in Verbindung mit Fig.3 im einzelnen erläutert wird.

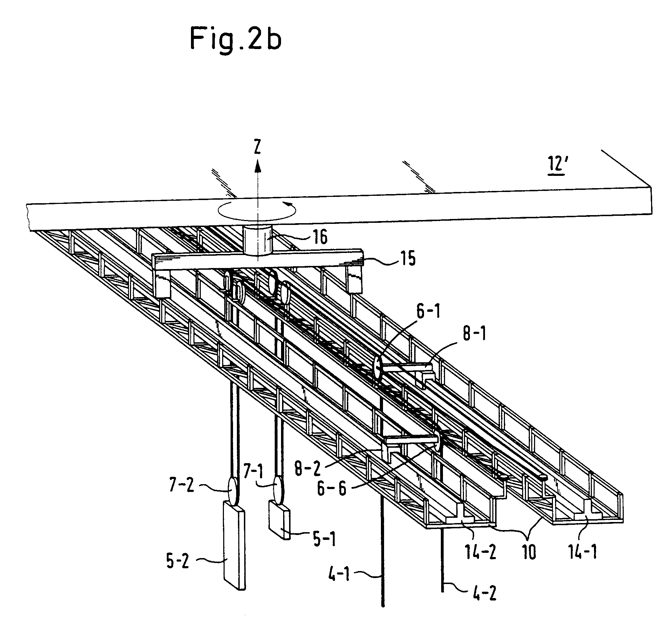

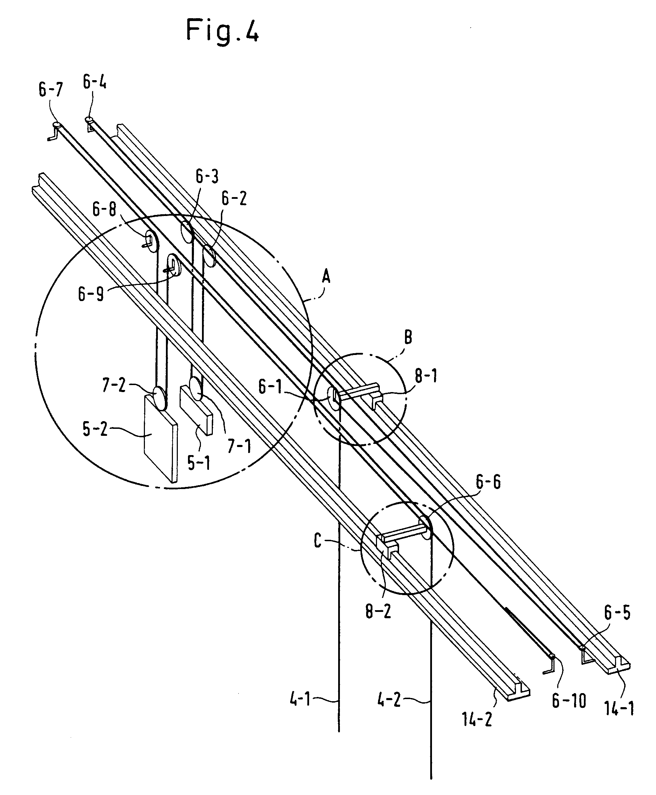

Über dem Modell 3 sind schematisch dargestellte Tragrahmen 10 mit Schienen 14-1 und 14-2 (siehe Fig.3 und 4) vorgesehen. In Fig.1 sind die Tragrahmen 10 mittels einer Aufhängung 13 an einer schematisch angedeuteten Decke 12 befestigt. Dagegen sind in Fig.2b zwei schematisch wiedergegebene Tragrahmen 10 beispielsweise mittels eines Tragbügels 15 verbunden, welcher seinerseits über ein Zwischenteil 16 so an einer Tragstruktur 12' gehaltert ist, daß die beiden Tragrahmen 10 um die z-Achse drehbar sind. Im Unterschied hierzu sind in Fig.2a die Tragrahmen 10 am oberen Ende einer vertikal ausgerichteten Gitterstruktur 11 befestigt, welche mit ihrer Basis an dem Zwischenboden 33 (siehe Fig.3) des Versorgungsmoduls 31 befestigt ist.

Entsprechend dem in Fig.1 angedeuteten, orthogonalen Koordinatensystem mit jeweils um 90° gegeneinander versetzten x-, y- und z-Achsen sind die Tragrahmen 10 mit den daran befestigten Schienen 14-1 und 14-2 horizontal in Richtung der y-Achse ausgerichtet, während die in Fig.2a dargestellte Gitterstruktur 11 in vertikaler Richtung, d.h. in Richtung der z-Achse ausgerichtet ist.

Zur Simulation einer Drehung des Manipulators 2 gegenüber dem Modell eines Raumfahrzeugs 3 wird dieses (3) bei der Ausführungsform der Fig.1 bezüglich des nachgebildeten Manipulators 2 um die durch eine nicht näher bezeichnete Manipulatorbasis verlaufende z-Achse gedreht. Auch andere bei einem späteren Betrieb des Manipulators möglicherweise geforderte Bewegungsfreiheiten der Manipulatorbasis, beispielsweise eine translatorische Verschiebung in Richtung der y-Achse oder eine Drehung um die Längsachse können in einfacher Weise durch eine Relativbewegung des Raumfahrzeug-Modells simuliert werden.

Bei der Ausführungsform nach Fig.2a wird dagegen der Aufbau aus der Gitterstruktur 11 und den am oberen Ende der Gitterstruktur befestigten Tragrahmen 10 einschließlich des nachgebildeten Manipulators 2 relativ zu dem gesamten Raumfahrzeug-Modell 3 um die in Fig.1 in vertikaler Richtung verlaufenden z-Achse gedreht. Hierbei ist der Abstand zwischen dem oder den horizontal verlaufenden Tragrahmen 10, welche bei der erfindungsgemäßen Einrichtung den wesentlichen Teil der Mechanik tragen, und der Manipulatorbasis, d.h. die Montagehöhe der Gitterstruktur 11 über dem Modell 3, durch die maximale Höhe festgelegt, welche der von der Manipulatorbasis am weitesten entfernte Anlenkpunkt erreichen kann.

Bei der Ausführungsform nach Fig.2b sind die Tragrahmen 10 über das an dem Tragbügel 15 angebrachte Zwischenteil 16 bezüglich der Tragstruktur 12' so drehbar gehaltert, daß die miteinander verbundenen Tragrahmen 10 jeweils genau über dem sich um die z-Achse drehenden Manipulator 2 positioniert werden können. Die möglichen Drehbewegungen der Ausführungsformen nach Fig.1, 2a und 2b um die z-Achse sind in Fig.1 und 2b durch einen offenen Kreis angedeutet, wobei durch die an den freien Enden des offenen Kreises eingezeichneten Pfeilspitzen Drehbewegungen in bzw. entgegen dem Uhrzeigersinn angezeigt sind.

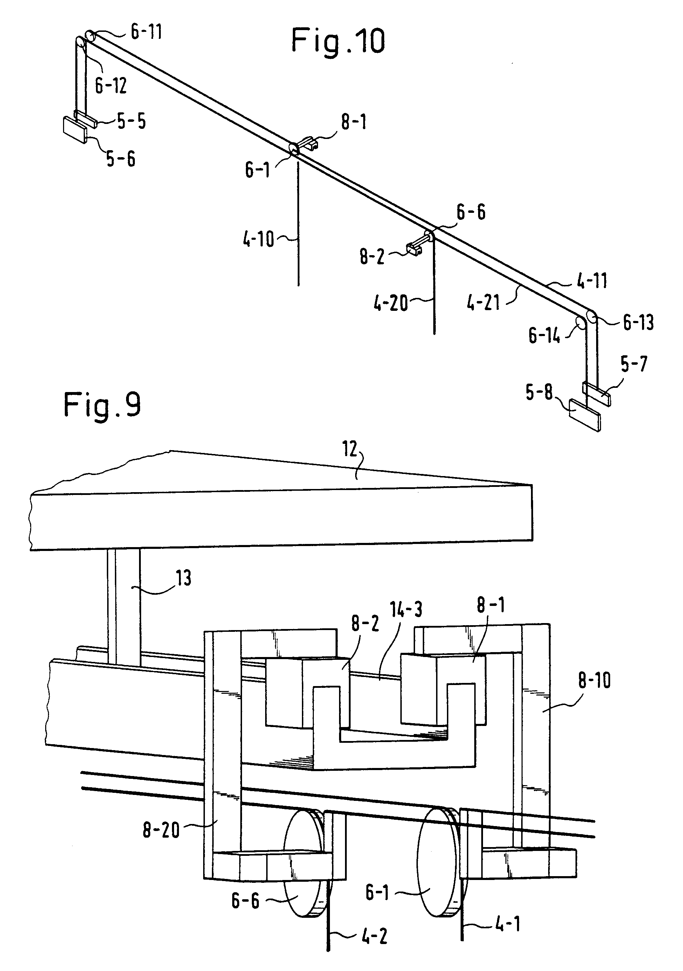

Auf den an den Tragrahmen 10 angebrachten Schienen 14-1 und 14-2 sind Schlitten 8-1 und 8-2 leicht, d.h. möglichst reibungsarm, verfahrbar geführt. In Fig.9 ist eine Modifikation zur Führung der Schlitten 8-1 und 8-2 mit einer momentenfreien Seilanlenkung bezüglich einer U-förmigen Schiene 14-3 dargestellt. Hierbei sind die parallel zur x-Achse gelagerten Umlenkrollen 6-1 sowie 6-6 an in Vorderansicht etwa C-förmigen Tragteilen 8-10 bzw. 8-20 so gehaltert, daß die Umlenkrollen 6-1 und 6-6 genau vertikal unter den zugehörigen Schlitten 8-1 und 8-2 angeordnet sind. Mittels der aktiv oder passiv verfahrbaren Schlitten 8-1 und 8-2 erfolgt eine Positionierung der Umlenkrollen 6-1 und 6-6 genau senkrecht über nicht dargestellten Anlenkpunkten an den zugehörigen Manipulator-Segementen, beispielsweise 2-2 und 2-3.

An den beiden Schlitten 8-1 und 8-2 sind Umlenkrollen 6-1 bzw. 6-6 drehbar gehaltert, wie im einzelnen Fig.3 und insbesondere Fig.4 zu entnehmen ist. Über die Umlenkrollen 6-1 und 6-6 sind jeweils Seile 4-1 bzw. 4-2 geführt, welche mit einem Ende an Segmenten 2-2 bzw. 2-3 des Manipulators 2 befestigt sind. Die Seile 4-1 und 4-2 laufen über am Ende der Tragrahmen 10 parallel zur z-Achse drehbar gehalterte Umlenkrollen 6-4 bzw. 6-7, weiter über parallel zur x-Achse gelagerte und nahe der Tragrahmenmitte befestigte Umlenkrollen 6-3 bzw. 6-8, ferner über an Gegengewichten 5-1 bzw. 5-2 jeweils parallel zur x-Achse gelagerte und entsprechend gehalterte Umlenkrollen 7-1 bzw. 7-2, über weitere an dem Tragrahmen parallel zur x-Achse gelagerte und nahe der Tragrahmenmitte gehalterte Umlenkrollen 6-2 bzw. 6-9 sowie über am anderen Ende der Tragrahmen 10 parallel zur z-Achse gelagerte Umlenkrollen 6-5 bzw. 6-10 zurück zu den Schlitten 8-1 bzw. 8-2, an welchen die anderen Enden der Seile 4-1 bzw. 4-2 befestigt sind

Wie aus den Fig.1, 2a und 3 zu ersehen ist, sind die Seile 4-1 bzw. 4-2 seitlich bezüglich der jeweiligen, nicht dargestellten Segment-Längsachse und damit seitlich bezüglich des jeweiligen, nicht angegebenen Segment-Schwerpunkts versetzt, genau senkrecht unter der zugehörigen Umlenkrolle 6-1 bzw. 6-6 auf verschiedenen Seiten der Segmente 2-2 bzw. 2-3 des Manipulators 2 angebracht. Zur Gewichtskompensation der einzelnen Segmente 2-2 und 2-3 sind die Gegengewichte 5-1 bzw. 5-2 so dimensioniert, daß sie etwa dem doppelten Gewicht des jeweils zu entlastenden Manipulator-Segments 2-2 und 2-3 entsprechen. Zur Vermeidung von unerwünschten Schwingungen der Gegengewichte 5-1 und 5-2 in der xy-Ebene sind diese vorzugsweise in Richtung der z-Achse, d.h. in vertikaler Richtung geführt.

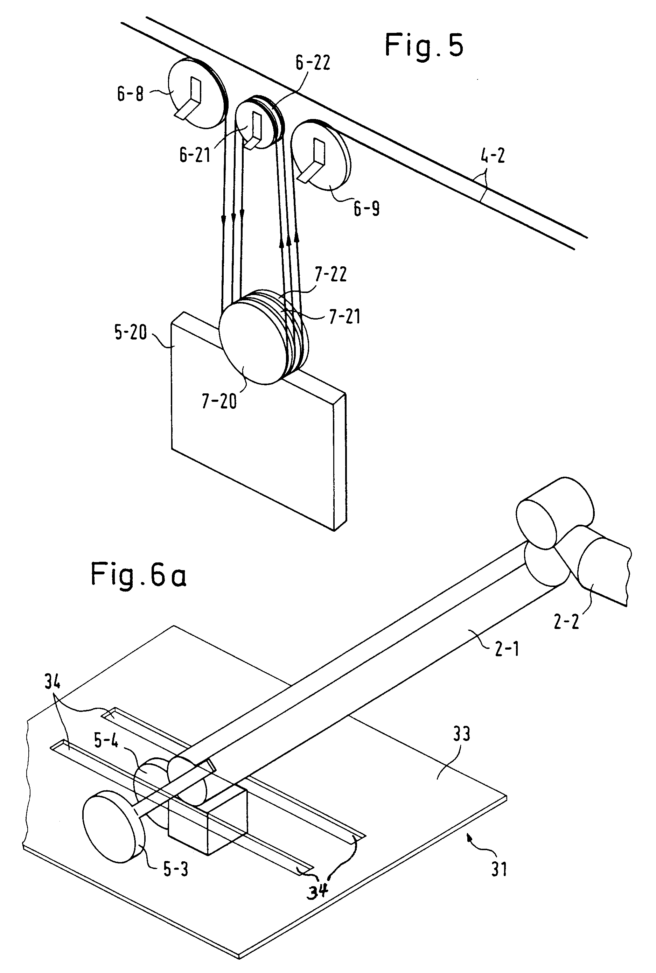

Wie in Fig.5 dargestellt ist, können an Gegenwichten beispielsweise 5-20, statt jeweils einer Umlenkrolle mehrere lose Rollen 7-20 bis 7-22 vorgesehen sein. Zusätzlich müssen dann an dem Tragrahmen in diesem Fall noch zusätzlich zwei parallel zur x-Achse gelagerte Umlenkrollen 6-21 und 6-22 vorgesehen sein; das Gegengewicht 5-20 muß dann entsprechend bemessen werden. Der Nachteil der höheren Masse des Gegengewichts 5-20 wird dadurch ausgeglichen, daß in der z-Richtung ein kürzerer Verfahrweg und eine geringere Beschleunigung bei den mit mehreren Umlenkrollen versehenen Gegengewichten erreicht ist.

Statt der Gegengewichte 5-1, 5-2 oder 5-20 und statt der Seile 4-1 sowie 4-2 können gemäß einer bevorzugten Weiterbildung der erfindungsgemäßen Einrichtung an dem jeweiligen Schlitten 8-1 bzw. 8-2 auch nicht näher dargestellte Seilwinden befestigt sein, von welchen aus den Seilen 4-1 und 4-2 entsprechende Seile direkt zu den jeweiligen Anlenkpunkten an den einzelnen Segmenten geführt sind. Ferner können auch in Richtung der y-Achse kontrolliert verfahrbare Seilwinden an den Tragrahmen 10 befestigt sein, wobei dann den Seilen 4-1 und 4-2 entsprechende Seile über Trommeln der jeweiligen Seilwinden geführt sind. Zur Beeinflussung der Dynamik der erfindungsgemäßen Simulations-Einrichtung können gemäß einer weiteren bevorzugten Ausführungsform der Erfindung die Gegengewichte 5-1 oder 5-2 und/ oder einer oder beide Schlitten 8-1 und 8-2 durch entsprechende Antriebe bewegt werden.

In Fig.6a ist ein nicht näher dargestellter Lenkantrieb für das Segment 2-1 durch Gegengewichte 5-3 bzw. 5-4 direkt entlastet, wobei die beiden Gegengewichte 5-3 und 5-4 auf verschiedenen Seiten des Segments 2-1 direkt auf der dem Segment 2-1 abgewandten Seite einer nicht näher bezeichneten Drehachse angebracht sind. Um die Verschwenkbarkeit des Segments 2-1 nicht zu beeinträchtigen, sind in dem Zwischenboden 33 zwei parallele, in y-Richtung verlaufende Ausschnitte 34 ausgebildet.

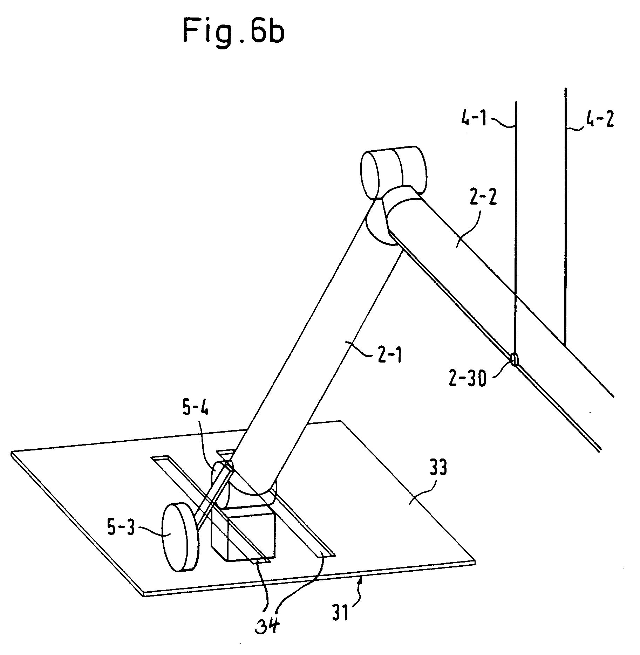

Fig.6b entspricht hinsichtlich der konstuktiven Ausführung im wesentlichen Fig.6a. Jedoch sind bei der bevorzugten Ausführung nach Fig.6b im Unterschied zu den bisher beschriebenen und beispielsweise in Fig. 1, 2a und 3 dargestellten Ausführungsformen die beiden Seile 4-1 und 4-2 auf verschiedenen Seiten ein und desselben Manipulator-Segments 2-2 vorzugsweise an aktiv oder passiv verschiebbaren Anlenkpunkten 2-30 angebracht.

Entsprechend dem Grundgedanken der erfindungsgemäßen Einrichtung ist somit eine segmentweise Gewichtsentlastung nur eines oder einzelner Manipulator-Segmente 2-2 bzw. 2-2 und 2-3 jeweils durch eine Seilaufhängung in der Weise geschaffen, daß, wie anhand von Fig.1 bis 3 vorstehend bereits ausgeführt, die entsprechenden Seile 4-1 und 4-2 seitlich versetzt zum jeweiligen Einzelschwerpunkt des zu entlastenden Manipulator-Segments 2-2 bzw. 2-3 angebracht sind. Das heißt, die Seilaufhängung ist bezüglich eines in der yz-Ebene liegenden Segment-Schwerpunkts vorzugsweise in Richtung der x-Achse in entgegengesetzten Richtungen verschoben. Dadurch ist eine Aufhebung der durch die Gewichtskraft der einzelnen Segmentabschnitte bedingten Momente um die zur x-Achse parallelen, nicht näher bezeichneten Gelenkachsen der entsprechenden Manipulator-Segmente erreicht. Bei nichtunterstützten bzw. aufgehängten Segmenten eines Manipulators müßten diese Momente von den einzelnen Segmentantrieben aufgebracht werden.

Wenn, wie in den Darstellungen der Fig.1 bis 4 jeweils zwei Segmente durch eine entsprechende Seilaufhängung entlastet werden, ist durch die vorstehend beschriebene, in der x-Richtung seitlich versetzte Seilanlenkung erreicht, daß nahezu die gesamte Kinematik des zu simulierenden Manipulators 2 nachbildbar ist, wobei jedoch, wie vorstehend ebenfalls bereits ausgeführt ist, die beiden Anlenkungen auf verschiedenen Seiten der durch die jeweilige Segment-Längsachse verlaufende yz-Ebene liegen müssen.

Zu einer Kollision von Manipulator-Segmenten und beispielsweise den an verschiedenen Segmenten, wie 2-2 und 2-3 angebrachten Seilen 4-1 und 4-2 kann es nur dann kommen, wenn der Raum verlassen wird, welcher zwischen den beiden, zur yz-Ebene parallelen Ebenen gebildet ist, in denen jeweils die beiden Seile 4-1 bzw. 4-2 liegen. Durch eine größere seitliche Versetzung der Anlenkpunkte an den einzelnen Manipulator-Segmenten, beispielsweise 2-2 und 2-3 in Richtung der x-Achse weiter nach außen, d.h. durch eine entsprechend größere Exzentrizität, kann der Raum zwischen den beiden yz-Ebenen, in welchen die Seile 4-1 und 4-2 liegen, entsprechend vergrößert werden. Damit wird die Wahrscheinlichkeit einer Behinderung oder gar einer Kollision des Manipulators 2 durch die Seile 4-1 bzw. 4-2 bzw. mit diesen verringert.

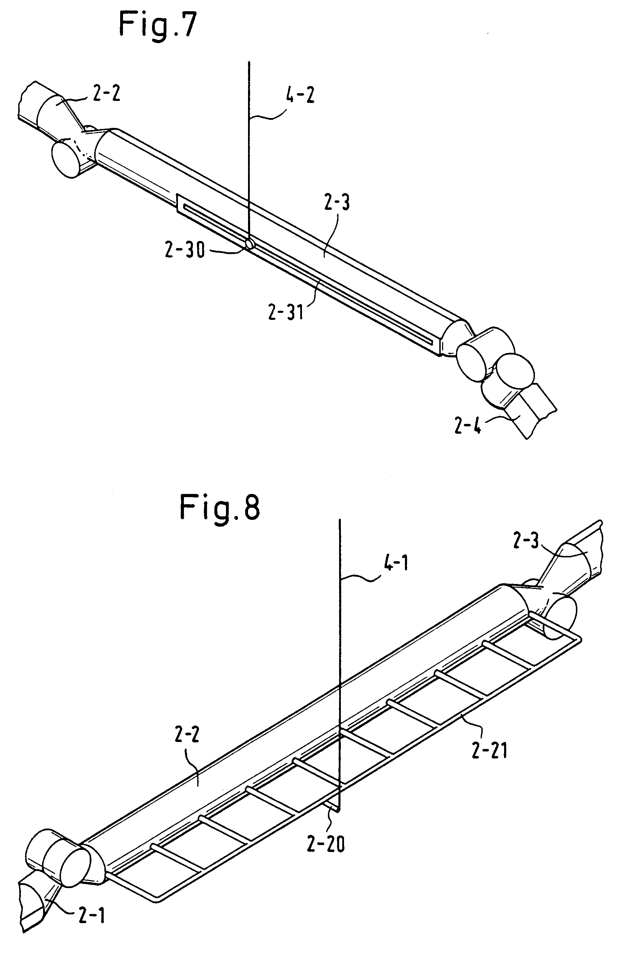

Die vorstehend beschriebene, seitlich zum jeweiligen Segment-Schwerpunkt versetzte Seilanlenkung kann entweder so, wie in Fig.1, 2a oder 3 angedeutet, starr oder aber, wie in Fig.7 dargestellt, durch einen in Längsrichtung eines Segments, beispielsweise des Segments 2-3, verschiebbaren Anlenkpunkt 2-30 erfolgen. Eine derartige Verschiebung wird während des Manipulatorbetriebs mittels eines geregelten, nicht näher dargestellten Aktuators vorgenommen. Eine derartige kontrollierte variable Anlenkung ist vor allem dann vorteilhaft und zweckmäßig, wenn auf das zu entlastende Manipulator-Segment, beispielsweise 2-3, noch weitere nicht gewichtsentlastete Segmente, wie beispielsweise ein Segment 2-4, folgen. Der Anlenkpunkt 2-30 kann dann auf den sich durch Manipulator-Bewegungen veränderlichen Gesamtschwerpunkt des letzten entlasteten Segments, beispielsweise 2-3 und auf die folgenden, nicht mehr einzeln unterstützten Segmente eingestellt werden. Das bedeutet, die y-Koordinaten beispielsweise des Anlenkpunktes 2-30 und des Gesamtschwerpunktes des jeweiligen Segmentes beispielsweise 2-3 werden zur Deckung gebracht. Dadurch ist eine vollständige Entlastung des Gelenkantriebs des letzten, angelenkten Manipulatorsegmentes, beispielsweise 2-3 vollkommen unabhängig von der aktuellen Konfiguration des nachfolgenden, nicht mehr unterstützten Manipulator-Abschnitts erreicht.

Für strukturell besonders schwache Manipulatoren, die beispielsweise der Original-Flug-Hardware entsprechen, ist in Fig.8 eine Modifikation einer exzentrischen Seilanlenkung dargestellt, durch welche beispielsweise das Manipulator-Segment 2-2 durch eine an einer Anzahl Stellen befestigte, kammartige Stützeinrichtung 2-21 versteift ist. Die Seilanlenkung selbst erfolgt dann ebenfalls wieder zum Segment-Schwerpunkt seitlich versetzt, d.h. in Richtung der x-Achse seitlich verschoben an einem Anlenkpunkt 2-20.

In Fig.10 ist bezüglich der Seilführung und der Anordnung von Gegengewichten eine weitere Ausführungsform der erfindungsgemäßen Einrichtung dargestellt. Im Unterschied zu der anhand von Fig.1 bis 9 beschriebenen Ausführungsform der Erfindung sind bei dieser Ausführungsform jedem zu entlastenden Manipulator-Segment 2-2 und 2-3 zwei Seilabschnitte 4-10 und 4-11 bzw. 4-20 und 4-21 zugeordnet. Hierbei ist der Seilabschnitt 4-10 über die am Schlitten 8-1 drehbar gehalterte Umlenkrolle 6-1 und eine weitere, vorzugsweise am Ende der Tragrahmen 10 drehbar gehalterte Umlenkrolle 6-11 geführt und mit seinem freien Ende an einem Gegengewicht 5-5 befestigt. Der zweite Seilabschnitt 4-11 ist mit einem Ende an dem Schlitten 8-1 befestigt, über eine Umlenkrolle 6-13, welche bezüglich der Umlenkrolle 6-11 am anderen Ende der Tragrahmen 1o drehbar gehaltert ist, geführt und mit seinem anderen Ende an einem Gegengewicht 5-7 befestigt. In entsprechender Weise ist der Seilabschnitt 4-20 über die am Schlitten 8-2 drehbar gehalterte Umlenkrolle 6-6 sowie die an dem in Fig. 10 linken Ende der Tragrahmen 10 drehbar gehalterten Umlenkrolle 6-12 geführt und mit seinem freien Ende an einem Gegengewicht 5-6 befestigt. Der zweite Seilabschnitt 4-21 ist mit einem Ende an dem Schlitten 8-2 befestigt, über die nahe bei der Umlenkrolle 6-13 drehbar gehalterte Umlenkrolle 6-14 geführt und mit dem anderen Ende an einem Gegengewicht 5-8 befestigt.

Durch die unmittelbare Befestigung der Seilabschnitte 4-11 und 4-21 an dem in Richtung der y-Achse verfahrbaren Schlitten 8-1 bzw. 8-2 und durch die Führung der Seilabschnitte 4-11 und 4-21 über die Umlenkrollen 6-13 bzw. 6-14 sowie deren Befestigung an den jeweiligen Gegengewichten 5-7 bzw. 5-8 ist in Richtung der y-Achse an den Schlitten 8-1 bzw. 8-2 ein statisches Gleichgewicht dann erzeugt, wenn die Massen der Gegengewichte 5-5 bis 5-8 jeweils in etwa der Masse der jeweils zu entlastenden Manipulatorsegmente, beispielsweise 2-2 und 2-3, entsprechen. Die Gegengewichte 5-5 5-8 sind, wie auch bereits bezüglich der Gegengewichte 5-1 bis 5-4 ausgeführt ist, durch geregelte ortsfeste Seilwinden ersetzbar.

Der wesentliche Unterschied zwischen diesen beiden Ausführungsformen der erfindungsgemäßen Einrichtung besteht hierbei darin, daß bei der vorstehend beschriebenen Ausführungsform die zur Entlastung eines Segments benötigte Mechanik, wie Segment-Anlenkpunkt, Seilabschnitte, Umlenkrollen sowie die Schwerpunkte der Ge-gengewichte usw., in einer Ebene liegen.

## Patentansprüche

1. Einrichtung zur Simulation auf der Erde von in Richtung der und um die drei Achsen eines orthogonalen Koordinatensystems durchführbaren Operationen eines im Weltraum einsetzbaren Manipulators an einem Modell eines Raumfahrzeugs,
dadurch **gekennzeichnet,**
daß ein horizontal angeordneter Tragrahmen (10) zur Halterung von vorzugsweise zwei in y-Richtung verlaufenden Schienen (14-1; 14-2) vorgesehen ist, auf denen leicht bewegbare Schlitten (8-1; 8-2) geführt sind, welche jeweils eine Umlenkrolle (6-1; 6-6) tragen, über welche jeweils ein Seil (4-1; 4-2) geführt ist;
daß die beiden Seile (4-1; 4-2) mit einem freien Ende an zwei verschiedenen Segmenten (2-2; 2-3) eines nachgebildeten Manipulators, seitlich bezüglich der jeweiligen Segment-Längsachse und des jeweiligen Segment-Schwerpunkts versetzt, auf entgegengesetzten Seiten der beiden Segmente (2-2; 2-3) genau unter der jeweiligen Umlenkrolle (6-1; 6-6) befestigt sind;
daß die beiden Seile (4-1; 4-2) über am Tragrahmen (10) gehalterte Umlenkrollen (6-4; 6-7 sowie 6-3 und 6-8), über an Gegengewichten (5-1; 5-2) gehalterte Umlenkrollen (7-1; 7-2), über weitere am Tragrahmen (10) gehalterte Umlenkrollen (6-2; 6-9 sowie 6-5; 6-10) geführt und an dem jeweils zugehörigen Schlitten (8-1; 8-2) befestigt sind,
daß zur Erzeugung eines Kräftegleichgewichts an den beiden Seilen (4-1; 4-2) die beiden Gegengewichte (5-1; 5-2) entsprechend dem Gewicht des jeweils entlastenden Manipulator-Segments (2-2; 2-6) und den jeweils an den Gegengewichten (5-1; 5-2) gehalterten, losen Rollen (7-1; 7-2) so dimensioniert sind, daß ihr Gewicht etwa dem doppelten Gewicht des zu entlastenden Manipulator-Segments entspricht, und
daß zur Simulation einer Drehung des Manipulators (2) gegenüber dem Modell eines Raumfahrzeugs (3) um die durch den Manipulator-Basispunkt verlaufende z-Achse das Modell eines Raumfahrzeugs (3) mittels eines Antriebssystems bezüglich des nachgebildeten Manipulators (2) um die durch die Manipulator-Basis verlaufende z-Achse drehbar ist.

2. Einrichtung zur Simulation auf der Erde von in Richtung der und um die drei Achsen eines orthogonalen Koordinaten-systems durchführbaren Operationen eines im Weltraum einsetzbaren Manipulators an einem Modell eines Raumfahrzeugs,
dadurch **gekennzeichnet,**
daß ein horizontal angeordneter Tragrahmen (10) zur Halterung von vorzugsweise zwei in y-Richtung verlaufenden Schienen (14-1; 14-2) vorgesehen ist, auf denen leicht bewegbare Schlitten (8-1; 8-2) geführt sind, welche jeweils eine Umlenkrolle (6-1; 6-6) tragen, über welche jeweils ein Seil (4-10; 4-20) geführt ist,
daß die beiden Seile (4-10; 4-20) mit einem freien Ende an zwei verschiedenen Segmenten (2-2; 2-3) eines nachgebildeten Manipulators, seitlich bezüglich der jeweiligen Segment-Längsachse und des jeweiligen Segment-Schwerpunkts versetzt,
auf entgegengesetzten Seiten der beiden Segmente (2-2; 2-3) genau unter der jeweiligen Umlenkrolle (6-1; 6-6) des zugehörigen Schlittens (8-1; 8-2) befestigt sind, und die beiden Seile (4-10; 4-20) jeweils über am Ende des Tragrahmens (10) gehalterte Umlenkrollen (6-11; 6-12) geführt und mit ihrem anderen Ende jeweils an Gegengewichten (5-5; 5-6) befestigt sind, deren Gewicht etwa demjenigen des jeweiligen Segmentgewichts entspricht, und
daß zur Aufrechterhaltung des statischen Gleichgewichts der beiden Schlitten (8-1; 8-2) an diesen jeweils noch ein Ende von weiteren Seilen (4-11; 4-21) befestigt ist, die jeweils über am anderen Ende des Tragrahmens (10) gehalterte Umlenkrollen (6-13; 6-14) geführt und mit ihrem anderen Ende jeweils an einem dem jeweiligen Segementgewicht entsprechenden Gegengewicht (5-7; 5-8) befestigt sind, und
daß zur Simulation einer Drehbewegung des Manipulators (2) gegenüber dem Modell eines Raumfahrzeugs (3) um die durch den Manipulator-Basispunkt verlaufende z-Achse das Modell eines Raumfahrzeugs (3) mittels eines Antriebssystems bezüglich des nachgebildeten Manipulators (2) um die durch die Manipulator-Basis verlaufende z-Achse drehbar ist.

3. Einrichtung zur Simulation auf der Erde von in Richtung der und um die drei Achsen eines orthogonalen Koordinatensystems durchführbaren Operationen eines im Weltraum einsetzbaren Manipulators an einem Modell eines Raumfahrzeugs,
dadurch **gekennzeichnet,**
daß ein horizontal angeordneter Tragrahmen (10) zur Halterung von vorzugsweise zwei in y-Richtung verlaufenden Schienen (14-1; 14-2) vorgesehen ist, auf denen leicht bewegbare Schlitten (8-1; 8-2) geführt sind, welche jeweils eine Umlenkrolle (6-1; 6-6) tragen, über welche jeweils ein Seil (4-1; 4-2) geführt ist,
daß die beiden Seile (4-1; 4-2) mit einem freien Ende auf entgegengesetzten Seiten an einem Segment (2-2) eines nachgebildeten Manipulators, seitlich bezüglich der Segment-Längsachse und des Segment-Schwerpunkts, genau unter der jeweiligen Umlenkrolle (6-1; 6-6) befestigt sind,
daß die beiden Seile (4-1; 4-2) über am Tragrahmen (10) gehalterte Umlenkrollen (6-4; 6-7 sowie 6-3; 6-8), über jeweils an Gegengewichten (5-1; 5-2) gehalterte Umlenkrollen (7-1; 7-2), über weitere am Tragrahmen (10) gehalterte Umlenkrollen (6-2; 6-9), über jeweils noch weitere, am Ende des Tragrahmens (10) gehalterte Umlenkrollen (6-5; 6-10) geführt und dann an dem jeweils zugehörigen Schlitten (8-1; 8-2) befestigt sind,
daß zur Erzeugung eines Kräftegleichgewichts an den beiden Seilen (4-1; 4-2) und zur Vermeidung von bei einer exzentrischen Belastung des Manipulators auftretenden Torsions- bzw. Biegemomenten die beiden Gegengewichte (5-1; 5-2) entsprechend dem Gewicht des zu entlastenden Manipulator-Segments (2-2) und den jeweils an den Gegengewichten (5-1; 5-2) gehalterten, losen Rollen (7-1; 7-2) so dimensioniert sind,
daß ihr Gewicht jeweils etwa dem Gewicht des zu entlastenden Manipulator-Segments entspricht, und
daß zur Simulation einer Drehung des Manipulators (2) gegenüber dem Modell eines Raumfahrzeugs (3) um die durch den Manipulator-Basispunkt verlaufende z-Achse das Modell eines Raumfahrzeugs (3) mittels eines Antriebssystems um die durch die Manipulator-Basis verlaufende z-Achse drehbar ist.

4. Einrichtung zur Simulation auf der Erde von in Richtung der und um die drei Achsen eines orthogonalen Koordinatensystems durchführbaren Operationen eines im Weltraum einsetzbaren Manipulators an einem Modell eines Raumfahrzeugs,
dadurch **gekennzeichnet,**
daß ein horizontal angeordneter Tragrahmen (10) zur Halterung von vorzugsweise zwei in y-Richtung verlaufenden Schienen (14-1; 14-2) vorgesehen ist, auf denen leicht bewegbare Schlitten (8-1; 8-2) geführt sind, welche jeweils eine Seilwinde tragen, die mit jeweils einem Seil verbunden sind, wobei die beiden Seile mit einem freien Ende an zwei verschiedenen Segmenten (2-2; 2-3) eines nachgebildeten Manipulators, seitlich bezüglich der jeweiligen Segment-Längsachse und des jeweiligen Segment-Schwerpunkts versetzt, auf entgegengesetzten Seiten der beiden Segmente (2-2; 2-3) genau unter der jeweiligen Seilwinde befestigt sind, und daß die beiden Seile mit ihrem anderen Ende an der Rolle der zugehörigen Seilwinde befestigt sind und die gewünschte Gewichtskompensation der Manipulator-Segmente (2-2; 2-3) dadurch erfolgt, daß die Seilkraft entsprechend dem Gewicht der Manipulator-Segmente (2-2; 2-3) durch eine entsprechende Regelung der Seilwinden geändert wird, und
daß zur Simulation einer Drehung des Manipulators (2) gegenüber dem Modell eines Raumfahrzeugs (3) um die durch den Manipulator-Basispunkt verlaufende z-Achse das Modell eines Raumfahrzeugs (3) mittels eines Antriebssystems bezüglich des nachgebildeten Manipulators (2) um die durch die Manipulator-Basis verlaufende z-Achse drehbar ist.

5. Einrichtung zur Simulation auf der Erde von in Richtung der und um die drei Achsen eines orthogonalen Koordinatensystems durchführbaren Operationen eines im Weltraum einsetzbaren Manipulators an einem Modell eines Raumfahrzeugs,
dadurch **gekennzeichnet,**
daß ein horizontal angeordneter Tragrahmen (10) zur Halterung von vorzugsweise zwei in y-Richtung verlaufenden Schienen (14-1; 14-2) vorgesehen ist, auf denen leicht bewegbare Schlitten (8-1; 8-2) geführt sind, welche jeweils eine Umlenkrolle (6-1; 6-6) tragen, über welche jeweils ein Seil (4-10; 4-20) geführt ist,
daß die beiden Seile (4-10; 4-20) mit einem freien Ende an zwei verschiedenen Segmenten (2-2; 2-3) eines nachgebildeten Manipulators, seitlich bezüglich der jeweiligen Segment-Längsachse und des jeweiligen Segment-Schwerpunkts versetzt, auf entgegengesetzten Seiten der beiden Segmente (2-2; 2-3) genau unter der jeweiligen Umlenkrolle (6-1; 6-6) des zugehörigen Schlittens (8-1; 8-2) befestigt sind, und die beiden Seile (4-10; 4-20) jeweils über eine an einem Ende des Tragrahmens (10) gehalterte Umlenkrolle (6-11; 6-12) geführt und mit ihrem anderen Ende jeweils mit einer am Tragrahmen (10) befestigten Seilwinde verbunden sind,
daß die gewünschte Gewichtskompensation der Manipulator-Segmente dadurch erfolgt, daß die Seilkraft entsprechend dem Gewicht der Manipulator-Segmente (2-2; 2-3) durch eine entsprechende Regelung der Seilwinden geändert werden kann,
daß zur Aufrechterhaltung des statischen Gleichgewichts die beiden Schlitten (8-1; 8-2) an diesen (8-1; 8-2) jeweils noch ein Ende von weiteren Seilen (4-11; 4-21) befestigt ist, die jeweils über am Ende des Tragrahmens (10) gehalterte Umlenkrollen (6-10; 6-14) geführt sind, und mit ihren anderen Enden jeweils mit einer am Tragrahmen (10) befestigten Seilwinde verbunden sind, und die gewünschte Seilkraft zur Aufrechterhaltung des statischen Gleichgewichts der beiden Schlitten (8-1; 8-2) durch eine entsprechende Regelung der Seilwinden geändert wird, und
daß zur Simulation einer Drehung des Manipulators (2) gegenüber dem Modell eines Raumfahrzeugs (3) um die durch den Manipulator-Basispunkt verlaufende z-Achse das Modell eines Raumfahrzeugs (3) mittel eines Antriebssystems bezüglich des nachgebildeten Manipulators (2) um die durch die Manipulator-Basis verlaufende z-Achse drehbar ist.

6. Einrichtung nach einem der Ansprüche 1, 2, 4 oder 5, dadurch **gekennzeichnet,** daß mindestens ein Segment (2-2) über mindestens das Seil (4-1; 4-10) gewichtskompensiert ist, und mindestens ein weiteres Segment (2-1) eines nachgebildeten Manipulators (2) durch mindestens ein Gegengewicht (5-3; 5-4) direkt auf der dem Segment (2-1) abgewandten Seite der Drehachse entlastet ist.

7. Einrichtung nach einem der Ansprüche 1 bis 6, dadurch **gekennzeichnet,** daß der Tragrahmen (10) an einer horizontal ausgerichteten Decke (12) befestigt ist.

8. Einrichtung nach einem der Ansprüche 1 bis 6, dadurch **gekennzeichnet,** daß der horizontal ausgerichtete Tragrahmen (10) an einer Tragstruktur (12') um die z-Achse drehbar derart gehaltert ist, daß der Tragrahmen (10) jeweils genau über dem sich um die z-Achse drehenden Manipulator (2) positionierbar ist.

9. Einrichtung nach einem der Ansprüche 1 bis 6, dadurch **gekennzeichnet,** daß der horizontale Tragrahmen (10) auf einer Gitterstruktur (11) befestigt ist, und daß zur Durchführung von Drehbewegungen der Aufbau aus Tragrahmen (10) und Gitterstruktur (11) einschließlich Manipulator (2) relativ zum Modell eines Raumfahrzeugs (3) um die z-Achse drehbar ausgebildet ist.

10. Einrichtung nach einem der Ansprüche 1 bis 3 und 6 bis 9, dadurch **gekennzeichnet,** daß die Gegengewichte (5-1; 5-2; 5-5 bis 5-8, 5-20) über mehrere lose Rollen (7-20 bis 7-22) mit den Seilen (4-1; 4-2; 4-10; 4-11; 4-20; 4-21) verbunden sind, wobei die losen Rollen (7-20 bis 7-22) am jeweiligen Gegengewicht gehaltert sind und, von der Anzahl der losen Rollen abhängig, zusätzlich entsprechende Umlenkrollen (6-21; 6-22) am Tragrahmen (10) befestigt sind, und
daß die Gegengewichte derart dimensioniert sind, daß ihr Gewicht nach dem Prinzip des Flaschenzugs in Abhängigkeit von der Anzahl loser Rollen (7-20 bis 7-22) ein entsprechendes Vielfaches des Gewichts des jeweiligen zu entlastenden Manipulator-Segments beträgt.

11. Einrichtung nach einem der Ansprüche 1 bis 10, dadurch **gekennzeichnet,** daß eine seitlich zur Längsachse versetzte Anlenkstelle (2-30) des letzten zu entlastenden Segments (2-3) mittels eines Aktuators aktiv so verschiebbar ist, daß die Anlenkstelle (2-30) und die y-Koordinate des Gesamtschwerpunkts des letzten, entlasteten Segments (2-3) und folgender, nicht mehr einzeln entlasteter Segmente (2-4) zur Deckung gebracht sind.

12. Einrichtung nach einem der Ansprüche 1 bis 11, dadurch **gekennzeichnet,** daß Manipulator-Segmente (2-2) jeweils durch eine an einer Anzahl Stellen angebrachte, kammartige Stützeinrichtungen (2-21) versteift sind.

13. Einrichtung nach einem der Ansprüche 1 bis 12, dadurch **gekennzeichnet,** daß die Schlitten (8-1; 8-2) mittels eines gesteuerten oder geregelten Antriebs über den Anlenkstellen positionierbar sind.

14. Einrichtung nach einem der Ansprüche 1 bis 3 und 6 bis 13, dadurch **gekennzeichnet,** daß zur Beeinflussung der Dynamik der Simulations-Einrichtung die Gegengewichte (5-1 oder 5-2; 5-5 bis 5-8; 5-20) und/oder der/die Schlitten (8-1; 8-2) durch Antriebe bewegbar sind.

15. Einrichtung nach einem der Ansprüche 1 bis 2 und 4 bis 14, dadurch **gekennzeichnet,** daß zur Aufhebung oder zumindest zur Minderung des durch die exzentrische Anlenkung im Segment hervorgerufenen Torsions- bzw. Biegemoments ein Gegengewicht an einer über den Seilanlenkpunkt hinaus verlängerbaren Strebe derart angebracht ist, daß der Gesamtschwerpunkt aus zu entlastendem Segment und Ausgleichsgewicht nahe dem Seilanlenkpunkt zu liegen kommt.

## Claims

1. Apparatus for simulation on the ground of operations, performable in the direction of and about the three axes of an orthogonal coordinate system, of a manipulator adapted to be used in space on a model of a spacecraft,
characterized in
that a horizontally arranged support frame (10) is provided for holding preferably two rails (14-1; 14_2) which extend in the y direction and on which easily movable carriages (8-1; 8-2) are guided which each carry a guide pulley (6-1; 6-6) over which a respective cable (4-1; 4-2) is guided;
that the two cables (4-1; 4-2) are mounted with a free end on two different segments (2-2; 2-3) of a simulated manipulator, laterally offset with regard to the respective segment longitudinal axis and the respective segment centre of gravity, on opposite sides of the two segments (2-2; 2-3) exactly beneath the respective guide pulley (6-1; 6-6);
that the two cables (4-1; 4-2) are led via guide pulleys (6-4; 6-7 and 6-3 and 6-8) mounted on the support frame (10), via guide pulleys (7-1; 7-2) mounted on counterweights (5-1; 5-2), and via further guide pulleys (6-2; 6-9 and 6-5; 6-10) mounted on the support frame (10) and are secured to the respective associated carriage (8-1; 8-2),
that to obtain a force equilibrium at the two cables (4-1; 4-2) the two counterweights (5-1; 5-2) are so dimensioned corresponding to the weight of the particular relieving manipulator segment (2-2; 2-6) and the idle pulleys (7-1; 7-2) mounted on the respective counterweights (5-2; 5-2) that their weight corresponds substantially to twice the weight of the manipulator segment to be relieved, and that for simulation of a rotation of the manipulator (2) with respect to the model of a spacecraft (3) about the z axis passing through the manipulator base point the model of a spacecraft (3) is rotatable by means of a drive system with respect to the simulated manipulator (2) about the z axis extending through the manipulator base.

2. Apparatus for simulation on the ground of operations, performable in the direction of and about the three axes of an orthogonal coordinate system, of a manipulator adapted to be used in space on a model of a spacecraft,
characterized in
that a horizontally arranged support frame (10) is provided for holding preferably two rails (14-1; 14_2) which extend in the y direction and on which easily movable carriages (8-1; 8-2) are guided which each carry a guide pulley (6-1; 6-6) over which a respective cable (4-10; 4-20) is guided;
that the two cables (4-10; 4-20) are mounted with a free end on two different segments (2-2; 2-3) of a simulated manipulator, laterally offset with regard to the respective segment longitudinal axis and the respective segment centre of gravity, on opposite sides of the two segments (2-2; 2-3) exactly beneath the respective guide pulley (6-1; 6-6) of the associated carriage (8-1; 8-2), and the two cables (4-10; 4-20) are each guided via guide pulleys (6-11; 6-12) mounted on the end of the support frame (10) and with their other end are secured to respective counterweights (5-5; 5-6), the weight of which substantially corresponds to that of the respective segment weight, and
for maintaining the static equilibrium of the two carriages (8-1; 8-2), to the latter an end of further cables (4-11; 4-21) is also secured, which are each guided via guide pulleys (6-13; 6-14) mounted at the other end of the support frame (10) and are secured with their other end in each case to a counterweight (5-7; 5-8) corresponding to the respective segment weight, and
that for simulation of a rotation of the manipulator (2) with respect to the model of a spacecraft (3) about the z axis passing through the manipulator base point the model of a spacecraft (3) is rotatable by means of a drive system with respect to the simulated manipulator (2) about the z axis extending through the manipulator base.

3. Apparatus for simulation on the ground of operations, performable in the direction of and about the three axes of an orthogonal coordinate system, of a manipulator adapted to be used in space on a model of a spacecraft,
characterized in
that a horizontally arranged support frame (10) is provided for holding preferably two rails (14-1; 14_2) which extend in the y direction and on which easily movable carriages (8-1; 8-2) are guided which each carry a guide pulley (6-1; 6-6) over which a respective cable (4-1; 4-2) is guided;
that the two cables (4-1; 4-2) are secured with a free end on opposite sides to a segment (2-2) of a simulated manipulator, laterally offset with respect to the segment longitudinal axis and the segment centre of gravity, exactly beneath the respective guide pulley (6-1; 6-6),
that the two cables (4-1; 4-2) are guided via guide pulleys (6-4; 6-7 and 6-3; 6-8) mounted on the support frame (10), via guide pulleys (7-1; 7-2) mounted on counterweights (5-1; 5-2), via further guide pulleys (6-2; 6-9) mounted on the support frame (10) and via still further guide pulleys (6-5; 6-10) mounted on the end of the support frame (10) and are then secured to the respective associated carriage (8-1; 8-2),
that for obtaining a force equilibrium at the two cables (4-1; 4-2) and for avoiding torsion or bending moments occurring on an eccentric loading of the manipulator the two counterweights (5-1; 5-2) are dimensioned corresponding to the weight of the manipulator segment (2-2) to be relieved and the respective idle pulleys (7-1; 7-2) mounted on the counterweights (5-1; 5-2) in such a manner that their weight corresponds substantially to the weight of the manipulator segment to be relieved, and
that for simulation of a rotation of the manipulator (2) with respect to the model of a spacecraft (3) about the z axis extending through the manipulator base point the model of a spacecraft (3) is rotatable by means of a drive system about the z axis extending through the manipulator base.

4. Apparatus for simulation on the ground of operations, performable in the direction of and about the three axes of an orthogonal coordinate system, of a manipulator adapted to be used in space on a model of a spacecraft,
characterized in
that a horizontally arranged support frame (10) is provided for holding preferably two rails (14-1; 14-2) which extend in the y direction and on which easily movable carriages (8-1; 8-2) are guided which each carry a cable winch which are connected to a respective cable, the two cables being secured with a free end to two different segments (2-2; 2-3) of a simulated manipulator, offset with regard to the respective segment longitudinal axis and the respective segment centre of gravity, on opposite sides of the two segments (2-2; 2-3) exactly beneath the respective cable winch, and that the two cables are secured with their other end to the pulley of the associated cable winch and the desired weight compensation of the manipulator segments (2-2; 2-3) is effected in that the cable force is varied corresponding to the weight of the manipulator segment (2-2; 2-3) by a corresponding regulation of the cable winches, and
and that for simulation of a rotation of the manipulator (2) with respect to the model of a spacecraft (3) about the z axis passing through the manipulator base point the model of a spacecraft (3) is rotatable by means of a drive system with respect to the simulated manipulator (2) about the z axis extending through the manipulator base.

5. Apparatus for simulation on the ground of operations, performable in the direction of and about the three axes of an orthogonal coordinate system, of a manipulator adapted to be used in space on a model of a spacecraft,
characterized in
that a horizontally arranged support frame (10) is provided for holding preferably two rails (14-1; 14_2) which extend in the y direction and on which easily movable carriages (8-1; 8-2) are guided which each carry a guide pulley (6-1; 6-6) over which a respective cable (4-10; 4-20) is guided;
that the two cables (4-10; 4-20) are mounted with a free end on two different segments (2-2; 2-3) of a simulated manipulator, laterally offset with regard to the respective segment longitudinal axis and the respective segment centre of gravity, on opposite sides of the two segments (2-2; 2-3) exactly beneath the respective guide pulley (6-1; 6-6) of the associated carriage (8-1; 8-2), and the two cables (4-10; 4-20) are each guided via a guide pulley (6-11; 6-12) mounted on an end of the support frame (10) and are connected with their other end in each case to a cable winch mounted on the support frame (10), that the desired weight compensation of the manipulator segments is effected in that the cable force can be varied corresponding to the weight of the manipulator segments (2-2; 2-3) by a corresponding regulation of the cable winches,
that for maintaining the static equilibrium of the two carriages (8-1; 8-2) a respective end of further cables (4-11; 4-21) is secured thereto (8-1; 8-2), which are each guided via guide pulleys (6-10; 6-14) mounted at the end of the support frame (10), and with their other ends each connected to a cable winch mounted on the support frame (10), and the desired cable force for maintaining the static equilibrium of the two carriages (8-1; 8-2) is varied by a corresponding regulation of the cable winches, and
and that for simulation of a rotation of the manipulator (2) with respect to the model of a spacecraft (3) about the z axis passing through the manipulator base point the model of a spacecraft (3) is rotatable by means of a drive system with respect to the simulated manipulator (2) about the z axis extending through the manipulator base.

6. Apparatus according to any one of claims 1, 2, 4 or 5, characterized in that at least one segment (2-2) is weight-compensated via at least the cable (4-1; 4-10), and at least one further segment (2-1) of a simulated manipulator (2-2) is relieved by at least one counterweight (5-3; 5-4) directly on the side of the pivot axis remote from the segment (2-1).

7. Apparatus according to any one of claims 1 to 6, characterized in that the support frame (10) is secured to a horizontally aligned ceiling (12).

8. Apparatus according to any one of claims 1 to 6, characterized in that the horizontally aligned support frame (10) is mounted on a support structure (12') rotatable about the z axis in such a manner that the support frame (10) can be positioned respectively exactly above the manipulator (2) rotating about the z axis.

9. Apparatus according to any one of claims 1 to 6, characterized in that the horizontal support frame (10) is mounted on a grid structure (11) and that for performing rotational movements the structure of support frame (10) and grid structure (11), including the manipulator (2), is made rotatable relatively to the model of a spacecraft (3) about the z axis.

10. Apparatus according to any one of claims 1 to 3 and 6 to 9, characterized in that the counterweights (5-1; 5-2; 5-5 to 5-8, 5-20) are connected via several idle pulleys (7-20 to 7-22) to the cables (4-1;: 4-2; 4-10; 4-11; 4-20; 4-21), the idle pulleys (7-20 to 7-22) being mounted on the respective counterweight and, depending on the number of idle pulleys, corresponding guide pulleys (6-21; 6-22) being additionally mounted on the support frame (10), and
that the counterweights are dimensioned in such a manner that by the principle of a pulley block in dependence upon the number of idle pulleys (7-20 to 7-22) their weight is a corresponding multiple of the weight of the respective manipulator segment to be relieved.

11. Apparatus according to any one of claims 1 to 10, characterized in that an articulation point (2-30), offset laterally with respect to the longitudinal axis, of the last segment (2-3) to be relieved can be displaced actively by means of an actuator in such a manner that the articulation point (2-30) and the y coordinate of the total centre of gravity of the last relieved segment (2-3) and following segments (2-4) no longer relieved individually are brought into coincidence.

12. Apparatus according to any one of claims 1 to 11, characterized in that manipulator segments (2-2) are each stiffened by comb-like support means (2-21) attached to a number of points.

13. Apparatus according to any one of claims 1 to 12, characterized in that the carriages (8-1; 8-2) can be positioned above the articulation points by means of a controlled or regulated drive.

14. Apparatus according to any one of claims 1 to 3 and 6 to 13, characterized in that for influencing the dynamics of the simulation apparatus the weights (5-1 or 5-2; 5-5 to 5-8; 5-20) and/or the carriage/carriages (8-1; 8-2) are movable by drives.

15. Apparatus according to any one of claims 1, 2 and 4 to 14, characterized in that for cancelling or at least reducing the torsion or bending moment caused by the eccentric articulation in the segment a counterweight is attached to a strut adapted to be extended beyond the cable articulation point in such a manner that the total centre of gravity of the segment to be relieved and compensation weight comes to lie close to the cable articulation point.

## Revendications

1. Dispositif pour simuler sur terre des opérations exécutables le long et autour des trois axes d'un système de coordonnées orthogonales d'un manipulateur susceptible d'être mis en oeuvre dans l'espace sur un modèle de véhicule spatial, caractérisé
en ce qu'un cadre porteur (10) disposé horizontalement est prévu pour la fixation de préférentiellement deux rails (14-1 ; 14-2), orientés dans la direction y, sur lesquels sont guidés des chariots (8-1 ; 8-2) aisément déplaçables, qui supportent chacun une poulie de renvoi (6-1 ; 6-6), chaque poulie de renvoi guidant un câble (4-1 ; 4-2);
en ce que les deux câbles (4-1 ; 4-2) sont fixés par une extrémité libre à deux segments différents (2-2 ; 2-3) d'un manipulateur simulé, avec un décalage latéral par rapport à l'axe longitudinal de chaque segment et au barycentre de chaque segment, sur des faces opposées des deux segments (2-2 ; 2-3), exactement sous chaque poulie de renvoi (6-1 ; 6-6) ;
en ce que les deux câbles (4-1 ; 4-2) sont guidés par l'intermédiaire de poulies de renvoi (6-4 ; 6-7 ainsi que 6-3 et 6-8) portées par le cadre porteur (10), par l'intermédiaire de poulies de renvoi (7-1 ; 7-2) solidaires chacune de contrepoids (5-1 ; 5-2), par l'intermédiaire de poulies de renvoi supplémentaires (6-2 ; 6-9 et 6-5 ; 6-10) portées par le cadre porteur (10) et sont fixés chacun à leur chariot (8-1 ; 8-2) respectif ;
en ce que, pour équilibrer les forces au niveau des deux câbles (4-1 ; 4-2), les deux contrepoids (5-1 ; 5-2) sont dimensionnés en fonction du poids de chacun des segments de manipulateur (2-2 ; 2-3) à équilibrer et en fonction de chacune des poulies libres (7-1 ; 7-2) fixées aux contrepoids (5-1 ; 5-2), de telle sorte que leur poids corresponde approximativement au double du poids du segment manipulateur à équilibrer, et
en ce que pour simuler une rotation du manipulateur (2) par rapport au modèle d'un véhicule spatial (3) autour de l'axe z qui traverse la base du manipulateur, le modèle d'un véhicule spatial (3) est rotatif autour de l'axe z traversant la base du manipulateur, au moyen d'un système d'entraînement concernant le manipulateur simulé (2).

2. Dispositif pour simuler sur terre des opérations exécutables le long et autour des trois axes d'un système de coordonnées orthogonales d'un manipulateur susceptible d'être mis en oeuvre dans l'espace sur un modèle de véhicule spatial, caractérisé :
en ce qu'un cadre porteur (10) disposé horizontalement est prévu pour la fixation de préférentiellement deux rails (14-1 ; 14-2), orientés dans la direction y, sur lesquels sont guidés des chariots (8-1 ; 8-2) aisément mobiles, qui supportent chacun une poulie de renvoi (6-1 ; 6-6), chaque poulie guidant un câble (4-10 ; 4-20) ;
en ce que les deux câbles (4-10 ; 4-20) sont fixés par une extrémité libre à deux segments différents (2-2 ; 2-3) d'un manipulateur simulé, avec un décalage latéral par rapport à l'axe longitudinal de chaque segment et au barycentre de chaque segment, sur des faces opposées des deux segments (2-2 ; 2-3), exactement sous chaque poulie de renvoi (6-1 ; 6-6) du chariot correspondant (8-1 ; 8-2), et les deux câbles (4-10 ; 4-20) sont guidés chacun par l'intermédiaire de poulies de renvoi (6-11 ; 6-12) portées à l'extrémité du cadre porteur (10) et sont fixés chacun par leur autre extrémité à des contrepoids (5-5; 5-6) dont le poids correspond approximativement à celui du poids de chaque segment, et
en ce que pour maintenir l'équilibre statique des deux chariots (8-1 ; 8-2) est encore fixée à chacun de ceux-ci une extrémité de câbles supplémentaires (4-11 ; 4-21) qui sont guidés chacun par des poulies de renvoi (6-13 ; 6-14) portées par l'autre extrémité du cadre porteur (10) et qui sont fixés chacun par leur autre extrémité à un contrepoids (5-7 ; 5-8) correspondant au poids de chaque segment, et
en ce que pour simuler une rotation du manipulateur (2) par rapport au modèle d'un véhicule spatial (3) autour de l'axe z qui traverse la base du manipulateur, le modèle d'un véhicule spatial (3) est rotatif autour de l'axe z traversant la base du manipulateur, au moyen d'un système d'entraînement concernant le manipulateur simulé (2).

3. Dispositif pour simuler sur terre des opérations exécutables le long et autour des trois axes d'un système de coordonnées orthogonales d'un manipulateur susceptible d'être mis en oeuvre dans l'espace sur un modèle de véhicule spatial, caractérisé :
en ce qu'un cadre porteur (10) disposé horizontalement est prévu pour la fixation de préférentiellement deux rails (14-1; 14-2), orientés dans la direction y, sur lesquels sont guidés des chariots (8-1 ; 8-2) aisément mobiles, qui supportent chacun une poulie de renvoi (6-1 ; 6-6), chaque poulie de renvoi guidant un câble (4-1 ; 4-2) ;
en ce que les deux câbles (4-1 ; 4-2) sont fixés par une extrémité libre sur des faces opposées d'un segment (2-2) d'un manipulateur simulé, avec un décalage latéral par rapport à l'axe longitudinal du segment et au barycentre du segment, exactement sous chaque poulie de renvoi (6-1 ; 6-6),
en ce que les deux câbles (4-1 ; 4-2) sont guidés par l'intermédiaire de poulies de renvoi (6-4 ; 6-7 et 6-3; 6-8) portées par le cadre porteur (10), par l'intermédiaire de poulies de renvoi (7-1 ; 7-2) solidaires chacune de contrepoids (5-1 ; 5-2), par l'intermédiaire de poulies de renvoi supplémentaires (6-2 ; 6-9) portées par le cadre porteur (10), par l'intermédiaire d'autres poulies de renvoi (6-5 ; 6-10) supplémentaires portées chacune à l'extrémité du cadre porteur (10) et sont ensuite fixés chacun à leur chariot (8-1 ; 8-2) respectif,
en ce que pour équilibrer les forces au niveau des deux câbles (4-1 ; 4-2) et pour éviter l'apparition de moments de torsion ou de flexion lors d'un chargement excentré du manipulateur, les deux contrepoids (5-1 ; 5-2) sont dimensionnés en fonction du poids du segment du manipulateur (2-2) à équilibrer et en fonction des poulies libres (7-1 ; 7-2) respectivement fixées chacune aux contrepoids (5-1 ; 5-2), de telle sorte que le poids de chaque contrepoids corresponde approximativement au poids du segment de manipulateur à équilibrer, et
en ce que pour simuler une rotation du manipulateur (2) par rapport au modèle d'un véhicule spatial (3) autour de l'axe z qui traverse la base du manipulateur, le modèle d'un véhicule spatial (3) est rotatif autour de l'axe z traversant la base du manipulateur, au moyen d'un système d'entraînement.

4. Dispositif pour simuler sur terre des opérations exécutables le long et autour des trois axes d'un système de coordonnées orthogonales d'un manipulateur susceptible d'être mis en oeuvre dans l'espace sur un modèle de véhicule spatial, caractérisé :
en ce qu'un cadre porteur (10) disposé horizontalement est prévu pour la fixation de préférentiellement deux rails (14-1 ; 14-2), orientés dans la direction y, sur lesquels sont guidés des chariots (8-1 ; 8-2) aisément mobiles, lesquels supportent chacun un treuil à câble, chaque treuil à câble étant relié à un câble, les deux câbles étant fixés par une extrémité libre à deux segments différents (2-2 ; 2-3) d'un manipulateur simulé, avec un décalage latéral par rapport à l'axe longitudinal de chaque segment et au barycentre de chaque segment, sur des faces opposées des deux segments (2-2 ; 2-3), exactement sous chaque treuil à câble; et
en ce que les deux câbles sont fixés par leur autre extrémité à la poulie du treuil à câble correspondant et la compensation de poids souhaitée des segments de manipulateur (2-2 ; 2-3) résulte du fait que la force du câble est modifiée en fonction du poids des segments du manipulateur (2-2 ; 2-3), au moyen d'un réglage correspondant des treuils à câbles, et
en ce que pour simuler une rotation du manipulateur (2) par rapport au modèle d'un véhicule spatial (3) autour de l'axe z qui traverse la base du manipulateur, le modèle d'un véhicule spatial (3) est rotatif autour de l'axe z traversant la base du manipulateur, au moyen d'un système d'entraînement concernant le manipulateur simulé (2).

5. Dispositif pour simuler sur terre des opérations exécutables le long et autour des trois axes d'un système de coordonnées orthogonales d'un manipulateur susceptible d'être mis en oeuvre dans l'espace sur un modèle de véhicule spatial, caractérisé :
en ce qu'un cadre porteur (10) disposé horizontalement est prévu pour la fixation de préférentiellement deux rails (14-1 ; 14-2), orientés dans la direction y, sur lesquels sont guidés des chariots (8-1 ; 8-2) aisément mobiles, qui supportent chacun une poulie de renvoi (6-1 ; 6-6), chaque poulie guidant un câble (4-10 ; 4-20) ;
en ce que les deux câbles (4-10 ; 4-20) sont fixés par une extrémité libre à deux segments différents (2-2 ; 2-3) d'un manipulateur simulé, avec un décalage latéral par rapport à l'axe longitudinal de chaque segment et au barycentre de chaque segment, sur des faces opposées des deux segments (2-2 ; 2-3), exactement sous chaque poulie de renvoi des chariots (8-1 ; 8-2) correspondants, et les deux câbles (4-10 ; 4-20) sont guidés chacun par l'intermédiaire de poulies de renvoi (6-11 ; 6-12) portées par l'extrémité du cadre porteur (10) et sont reliés par leur autre extrémité chacun à un treuil à câble fixé au cadre porteur (10),
en ce que la compensation de poids souhaitée des segments de manipulateur (2-2 ; 2-3) résulte du fait que la force du câble peut être modifiée en fonction du poids des segments du manipulateur (2-2 ; 2-3), au moyen d'un réglage correspondant des treuils à câbles,
en ce que pour établir un équilibre de forces statique, une extrémité de câbles supplémentaires (4-11 ; 4-21) est encore fixée à chacun des deux chariots (8-1 ; 8-2), lesquels sont chacun guidés par l'intermédiaire de poulies de renvoi (6-10 ; 6-14) portées par l'extrémité du cadre porteur (10) et sont reliés chacun par leurs autres extrémités à un treuil à câble fixé au cadre porteur (10), et la force du câble souhaitée afin de maintenir l'équilibre statique des deux chariots (8-1 ; 8-2) est modifiée par l'intermédiaire d'un réglage correspondant des treuils à câble, et
en ce que pour simuler une rotation du manipulateur (2) par rapport au modèle d'un véhicule spatial (3) autour de l'axe z qui traverse la base du manipulateur, le modèle d'un véhicule spatial (3) est rotatif autour de l'axe z traversant la base du manipulateur ; au moyen d'un système d'entraînement concernant le manipulateur simulé (2).

6. Dispositif selon l'une des revendications 1, 2, 4 ou 5, caractérisé en ce qu'au moins un segment (2-2) est compensé en poids par au moins le câble (4-1 ; 4-10), et au moins un segment supplémentaire (2-1) d'un manipulateur simulé (2) est équilibré par au moins un contrepoids (5-3 ; 5-4) directement sur le côté de l'axe de rotation qui est éloigné du segment (2-1).

7. Dispositif selon l'une des revendications 1 à 6, caractérisé en ce que le cadre porteur (10) est fixé à une couverture (12) disposée horizontalement.

8. Dispositif selon l'une des revendications 1 à 6, caractérisé en ce que le cadre porteur (10) disposé horizontalement est porté par une structure porteuse (12') pouvant tourner autour de l'axe z de telle sorte que chaque cadre porteur (10) puisse être positionné exactement au-dessus du manipulateur (2) tournant autour de l'axe z.

9. Dispositif selon l'une des revendications 1 à 6, caractérisé en ce que le cadre porteur (10) est fixé sur une structure en réseau (11) et en ce que pour l'accomplissement de mouvements de rotation, l'ensemble constitué par le cadre porteur (10), la structure en réseau (11), et le manipulateur (2) relatif au modèle d'un véhicule spatial (3), est conçue comme étant mobile autour de l'axe z.

10. Dispositif selon l'une des revendications 1 à 3 et 6 à 9, caractérisé en ce que les contrepoids (5-1 ; 5-2; 5-5 à 5-8, 5-20) sont reliés aux câbles (4-1 ; 4-2 ; 4-10 ; 4-11 ; 4-20 ; 4-21) par l'intermédiaire de plusieurs poulies libres (7-20 à 7-22), les poulies libres (7-20 à 7-22) étant solidaires de chaque contrepoids et, selon le nombre de poulies libres, des poulies de renvoi supplémentaires (6-21 ; 6-22) correspondantes sont fixées au cadre porteur (10), et
en ce que les contrepoids sont dimensionnés de telle sorte que, selon le principe du palan, leur poids s'élève en fonction du nombre de poulies libres (7-20 à 7-22) à un multiple correspondant du poids du segment de manipulateur à équilibrer.

11. Dispositif selon l'une des revendications 1 à 10, caractérisé en ce qu'un point d'articulation (2-30) décalé latéralement par rapport à l'axe longitudinal du dernier segment (2-3) à équilibrer est déplaçable au moyen d'un actionneur actif de telle sorte que le point d'articulation (2-30) et la coordonnée y du centre de gravité global du dernier segment équilibré (2-3) et des suivants, et non plus des segments individuels équilibrés, sont reportés à la couverture.

12. Dispositif selon l'une des revendications 1 à 11, caractérisé en ce que les segments de manipulateur (2-2) sont renforcés chacun par un dispositif de renforcement (2-21) en forme de peigne fixé en un certain nombre de positions.

13. Dispositif selon l'une des revendications 1 à 12, caractérisé en ce que les chariots (8-1 ; 8-2) peuvent être positionnés au-dessus du point d'articulation au moyen d'un mécanisme commandé ou asservi.

14. Dispositif selon l'une des revendications 1 à 3 et 6 à 13, caractérisé en ce que pour influencer la dynamique du dispositif de simulation, les contrepoids (5-1 ou 5-2 ; 5-5 à 5-8 ; 5-20) et/ou le/les chariot(s) (8-1 ; 8-2) sont mobiles au moyen d'entraînements.

15. Dispositif selon l'une des revendications 1 à 2 et 4 à 14, caractérisé en ce que pour la suppression ou tout au moins pour la diminution des moments de torsion ou de flexion générés dans le segment par l'articulation excentrique, un contrepoids est disposé sur une entretoise allongeable au-delà du point d'articulation du câble de telle sorte que le centre d'inertie global du segment à équilibrer et du contrepoids se retrouve à proximité du point d'articulation du câble.
